Europäisches Patentamt

European Patent Office

Office européen des brevets

(11) Publication number:

**0 397 424**
**A2**

## EUROPEAN PATENT APPLICATION

(21) Application number: **90304899.9**

(22) Date of filing: **04.05.90**

(51) Int. Cl.5: **G01N 33/48**

(30) Priority: **08.05.89 US 348519**

(43) Date of publication of application:
**14.11.90 Bulletin 90/46**

(84) Designated Contracting States:
**AT BE CH DE DK ES FR GB GR IT LI LU NL SE**

(71) Applicant: **Biotrack, Inc.**
**1058 Huff Avenue**
**Mountain View California 94043(US)**

(72) Inventor: **Allen, Jimmy D.**
**1070 Rosemont Avenue**
**Los Altos, California 94022(US)**
Inventor: **Gibbons, Ian**
**831 La Mesa Drive**
**Portola Valley, California 94028(US)**
Inventor: **Harding, Ian**
**147 Burbank**
**San Mateo, California 94403(US)**
Inventor: **Levinson, Bari E.**
**144 Marylinn Drive**
**Milpitas, California 95035(US)**
Inventor: **Gorin, Michael M.**
**707 Bryant Street Unit 205**
**Palo Alto, California 94301(US)**

(74) Representative: **Harrison, David Christopher**
**et al**
**MEWBURN ELLIS 2 Cursitor Street**
**London EC4A 1BQ(GB)**

(54) **Multiple analysis system.**

(57) A clinical analytical system, comprising (1) an analytical cartridge comprising at least two sample containing means in which analytical reactions take place, wherein (a) each of the sample containing means contains reagent means wherein (i) at least one of the reagent means is present in only one of the sample containing means, (ii) all analyses are relevant to a single medical evaluation, (iii) each of the analyses requires no more than 150 µl of sample, and (iv) all reactions required for the analyses occur in the cartridge, and (b) the cartridge is formed from a plastic housing having dimensions no larger than 1 x 6 x 8 cm; and (2) an analytical instrument comprising (a) registration means for retaining the analytical cartridge in the instrument; (b) detector means for detecting results of the analyses; (c) message means for providing an alphanumeric message to a user of the instrument; (d) verification means for verifying proper operation of at least one step of each of the analyses; (e) control means for processing electronic information provided by the detector means and the verification means and relaying the information to the message means; the analytical instrument being no larger than 15 x 20 x 25 cm, the instrument reporting results of the analyses in no more than about 10 minutes.

## MULTIPLE ANALYSIS SYSTEM

This invention is related to analytical systems, particularly those used in clinical environments, in which more than one analytical result is provided concurrently from a single sample.

Measurement of analytes relevant to the management of patients, such as diagnosis of disease states and monitoring of therapies and of materials relevant to patient care, such as blood donations taken from volunteer subjects, have traditionally been carried out using techniques and instrumentation involving large, single-analysis instruments and relatively large quantities of sample, such as blood drawn by venipuncture. For example, the system most commonly in use in American hospitals for drawing blood samples involves individual evacuated test tubes, each of which is designed for collecting a sample for a single analytical instrument. Sample volumes are typically several to about 10 ml. Most of the analytical instruments in which the samples are used are relatively large, commonly being several feet in length, height, and width. In most cases, the analytical instruments are designed for a single type of analysis. In some cases, multiple analysis on a single sample is carried out, but the instrumentation is even more complex and often requires machinery approximately the size of a desk. Examples of instrumentation in common use in hospitals include Beckman Astra®, Abbot TDX®, and DuPont ACA®.

The blood-drawing system and analytical instruments described above require the use of trained technicians in addition to a significant amount of laboratory space. Accordingly, sample analysis has traditionally involved sending a sample to a remote laboratory or several laboratories for analysis or subjecting sample to analysis at a local site (e.g., a hospital laboratory) comprising a relatively large laboratory operated by several trained technicians.

There are situations in which there is a need to acquire several items of relevant clinical information for which the available traditional methods are not satisfactory. In some of these situations, results that are immediately available (for example, while a patient or blood donor is still available) would be of great value but are currently not available. Examples include blood donation, routine health examination, diabetes monitoring, emergency blood transfusion, and diagnosis of sexually transmitted disease. Traditional techniques that require off-site analysis are therefore often unsatisfactory for optional health care.

There are many situations that would be aided by a simple multiple test analytical system that could be used at the location where the sample is being obtained. One example is screening of donors who wish to donate blood. Currently a crude hemoglobin test is carried out on site using a drop of blood obtained from the potential donor. Other analyses are subsequently carried out on samples taken from the donated blood, so that the results are available only after the donor has left the premises. Currently, about 5 to 10% of donated blood must be discarded as a result of analyses carried out on samples of the blood after blood donation has taken place. If these analyses could be carried out immediately on a small volume of blood, considerable economy in blood donation would be obtained. Additionally, health hazards that might result from collected, infected blood that is inadvertantly not disposed of would be eliminated.

A number of patient-side devices exist for determining analytes in small volumes of sample using disposable cartridge and table-top analytical instruments. U.S. Patent No. 4,756,884 describes methods and devices using capillary flow tracks for analyzing samples for the presence of analytes or for the properties of the samples, such as clotting rates of blood samples. Analytical cartridges capable of carrying out more than one analysis in a single disposable cartridge are described in this patent. Nevertheless, there are a number of groups of analytes (referred to herein as analyte sets) that have not previously been analyzed in a single disposable cartridge because different techniques are currently used for detecting the analytical reactions used with these analytes. Accordingly, there remains a need for improved systems for carrying out multiple analyses in a small disposable cartridge that can be analyzed in a small, portable monitor.

## SUMMARY OF THE INVENTION

Accordingly, it is an object of the present invention to provide an analytical system comprising disposable analytical cartridges capable of carrying out more than one analysis on a small unmeasured sample, preferably containing no more than two drops (about 50 microliters) and a portable analytical instrument.

These and other objects of the invention have been accomplished by providing a clinical analytical system, comprising: (1) an analytical cartridge, comprising at least two sample containing means for retaining separate portions of liquid sample, each of said sample containing means comprising access means for entry of sample and capillary means for movement and retention of said sample, wherein (a) at least one of said sample containing means contains reagent means for reacting with said sample in an analysis wherein (i) at least one of said reagent means is present in only one of said sample containing means, (ii) all analyses are relevant to a single medical evaluation, (iii) each of said analyses requires no more than 150 $\mu$l of sample to provide a result, and (iv) all reactions required for said analyses occur in said cartridge as a result of said sample interacting with said reagent means in said sample containing means, and (b) said cartridge is formed from a housing having dimensions no larger than 1 x 6 x 8 cm; and (2) an analytical instrument comprising (a) registration means for retaining said analytical cartridge in said instrument; (b) detector means for detecting results of said analyses while said cartridge is retained in said instrument and providing said results in the form of electronic information, at least two of said detector means operating by different principles; (c) message means for providing an alphanumeric message to a user of said instrument; (d) control means for processing electronic information provided by said detector means and relaying said information to said message means, information provided by at least one detector system being sufficient to provide a quantitative result to a user; said analytical instrument being no larger than 15 x 20 x 25 cm, said instrument reporting results of said analyses in no more than about 10 minutes after initiation of said analyses.

The present invention will be better understood by reference to the following detailed description of the invention when considered in light of the drawings that form part of the present specification, wherein:

Figure 1 is a plan view of one embodiment of an analytical cartridge useful in the practice of the present invention.

Figure 2 (A-D) is a series of four cross-sectional view taken along lines A-A through D-D of the embodiment shown in Figure 1.

Figure 3 (A-C) is a series of three views (top, front, and side) of a system of the invention using an analytical cartridge of the embodiment of Figure 1 and a monitor.

Figure 4 is a block diagram of detector, control, and display systems used in a monitor of Figure 3.

The multiple assay system of the present invention is intended to provide several objective diagnostic assay results (at least two, usually three) using small, unmeasured volumes of sample, typically no more than 2 drops (about 50 microliters), while the subject is still in the presence of the system operator (preferably within about 5 minutes). The system does not require the use of a trained system operator and has minimal risk of an erroneous result. The system is particulary useful for capillary blood samples, for example capillary blood obtained by puncture of surface capillaries (a "finger stick" or blood obtained from an earlobe). A particular characteristic of the system is that is provides for several different types of assays (not just several assays of the same type) that are performed simultaneously using different detection methods.

Prior to the development of the present invention, no such systems were available; either commercially or in experimental use, despite the need for many years for such an invention by physicians and other health-care professionals, such as a blood-collecting staff. Health-care professionals often need a set of results relating to a single subject (patient) that in the prior art have been determined by different methods performed in different devices that are sometimes located in different laboratories. The present system provides a number of features integrated into a single system that gives user prompts, error messages, and objective results for a number of different types of tests using a single disposable cartridge and a portable analytical device. A number of individual components used in the system of the present invention have been developed in the laboratories of the assignee of the present inventors and are the subject of other issued patents and currently pending patent applications. However, these components have not been combined in the specific system described below. Those components of the system that are previously known are described in sufficient detail below to enable one skilled in the art to practice the present invention. However, additional background information and a number of details are set forth in the patents and patent applications that originally described these individual aspects of the system and which are incorporated into this specification by reference.

This system comprises a single-use, disposable, analytical cartridge, typically made by welding together two or more plastic pieces (usually prepared by injection molding), containing various channels and chambers; sample movement is typically provided by capillary force. The cartridge contains at least two cavities or other chambers capable of retaining sample, normally capillary "tracks" which may also contain a reagent used in analysis, the two or more sample containers providing for analysis by at least two different techniques. The capillary tracks, when present, comprise an entry port for entry of sample into the track, a capillary section that provides for sample flow and containment, and a vent to allow trapped air to escape so that capillary flow can take place. In some cases multiple capillary tracks use a common sample entry port; in other cases, entirely separate tracks with separate entry ports are provided.

3

The capillary sections are generally divided into several subsections that provide for different functions, such as sample flow, dissolution of reagent, analysis of results, verification of proper operation, or venting of trapped air bubbles. The geometry of these sections vary with the purpose of the section. For example, dissolution of reagents normally takes place in broad capillary chambers that provide a large surface area on which reagents can be dispersed and from which they will be rapidly resuspended or dissolved upon contact by sample. Sample flow is normally controlled by small capillary channels. Analysis and verification subsections have geometries shaped to cooperate with the detection system being used, such as flat or curved surfaces that cooperate with light passing through the walls of the capillary track so that the light is dispensed, concentrated, or left unaffected, depending on the desired result. For additional description of capillary flow devices, see U.S. Patent No. 4,756,884 and U.S. application serial numbers 016,506, filed February 17, 1987, and EP 90304300.8.

Blood can be modified in the capillary tracks or in an entry port prior to entry of sample into the capillary track to provide a sample better suited to a particular analysis. For example, blood can be filtered to provide plasma or lysed to provide a uniform, lysed medium. Filtration of red blood cells in capillary tracks is described in U.S. Patent No. 4,753,776. The sample can be lysed by passage through a lysis disc, which contains an agent that lyses red cells (discussed in detail below). The lysate can then be distributed into one or more capillary tracks for the individual assays.

The assay system also comprises a "monitor" (analytical instrument) capable of reading at least two and usually three or more assays simultaneously using detection systems and also incorporating verification systems (which can be the detection systems or can be separate detection systems) at various locations in the monitor to detect any failure of the system. Monitors for performing single analyses are described in U.S. Patent No. 4,756,884 and in U.S. application serial numbers 016,506, filed February 17, 1987, and EP 90304217.4 (attorney docket no. BIOT-23/27706), Also, see U.S. Patent No. 4,829,011 for a detector system that can be used in a monitor to detect agglutination of particles in a capillary track.

In particular, the present invention provides an analytical system for the measurement of multiple analytes, especially in blood samples, wherein the system provides a set of at least two objective results relevant to a situation in which it is desirable to make immediate decisions to manage a patient or other subject or blood (such as samples or units of drawn blood) taken from the patient/subject. Here objective means that no user measurement or interpretation is needed. The analytes are measured by at least two different analytical techniques, the system using a single disposable cartridge to receive the blood sample and distribute the sample among the reagents present in the cartridge. The disposable cartridge normally operates on one or two drops of whole blood collected by capillary surface puncture from a patient or other subject. The system uses a portable monitor that is capable of being powered by an internal battery and which provides user instructions, prompt messages, error messages, and results a readable form on a display within several minutes, the system being precalibrated so that user input at the time of analysis is not required.

The monitor contains systems of detectors (and associated light source or other inputs) for verifying that assay operations have occured properly, so that analysis can be repeated if necessary in accordance with messages (prompts) displayed by the monitor if improper operation has occured. The verification systems can be separate from the detection systems by which results are obtained or can be part the same system. For example, it is possible to verify correct operation of an alanine aminotransferase analysis that uses a reflectance reading from a reagent pad (described later in more detail) by comparing the time course of color formation with the normal manner in which color develops. Data showing normal color development can be stored in a computerized memory and compared to actual results by the same computer that measures color development at a particular time in the course of carrying out an individual analysis. An example of a separate verification system is a light source and detector present in the monitor at a particular location to determine whether sample reaches that location in the cartridge, as an indication of whether sufficient sample has been applied to the cartridge. For a number of verification systems that can be used to determine whether analysis has occurred correctly in a cartridge inserted into an instrument (and therefore not visible to the user), see EP 90303985.7.

Other monitor systems and a number of types of disposable cartridges that could be used for one or more analyses of a single type are disclosed in U.S. Patent No. 4,756,884, which is assigned to the assignee of the present application. Other devices and techniques are described in U.S. Patent Application Serial Nos. 090,026, filed August 27, 1987; 117,791, filed November 5, 1987; (Attorney docket BIOT-21/27684), filed April 20, 1989; and 937,307, filed December 3, 1986.

The present invention is particularly useful for carrying out analyses in which the set of analyses are selected from the following groupings:

a) alanine aminotransferase, antibody to hepatitis virus core

b) hemoglobin, alanine aminotransferase, antibody to human hepatitis virus core antigen

c) total hemoglobin, alanine aminotransferase, antibody to human hepatitis viruses

d) alanine amino transferase, antibody to hepatitis virus B, antibody to non-A, non-B human hepatitis virus

e) as a-d plus antibody to human cytomegalovirus

f) as a-d plus antibody to human immunodeficiency virus(es)

g) as a-d plus hepatitis B virus surface antigen

h) hemoglobin, cholesterol, glucose

i) cholesterol, high density lipoprotein cholesterol, low density lipoprotein cholesterol

j) triglyceride, cholesterol

k) glucose, % hemoglobin Alc

l) glucose, hemoglobin, hemoglobin Alc

m) glucose, fructosamine, % hemoglobin Alc

n) hemoglobin, hematocrit, glucose

o) blood types, hemoglobin

p) antigen(s) diagnostic of infection with Chlamydia trachomatis and Neisseria gonorrhoea.

These sets of analyses are particularly useful in the following situations:

a) blood donation (analyte sets a-g)

b) routine health check (analyte sets g-j)

c) diabetes monitoring (analyte sets k-n)

d) emergency blood transfusion (analyte set o)

e) diagnosis of sexually transmitted disease (analyte set p).

It will be recognized by one skilled in the art that these sets of analyses are exemplary and that numerous other sets of analysis relevant to a single medical evaluation exist.

The problems overcome by and advantages of the present system can be more readily seen in a specific example of the technology applied to a particular problem. Accordingly, the invention will be exemplified as it relates to screening of potential blood donors for donating suitability.

The major concern of blood collecting agencies is that after collection of blood units, some 5% have to be discarded because of potential infectivity. The identification of these units and their disposition (by law they must be destroyed or converted into some non-transfusable form) is difficult and expensive. Moreover, there is a finite risk that infectious units will not be eliminated and will be used for transfusion.

To overcome this problem the present invention can be provided as a "pre-donation screening system" which would be used prior to drawing a blood unit.

There are two main reasons for "deferring" a blood donation:

1) The donor's hemoglobin level is too low (anemia) and so taking blood would put the donor at risk.

2) The donor has been exposed to an incurable infectious disease which can be passed on by transfusion. There are three main classes of such infections: AIDS, Hepatitis B and "Non A, Non B" (NANB) Hepatitis. Existing satisfactory technology is used to screen for exposure to the AIDS virus which only results in elimination of a tiny fraction of units drawn (about 0.1%). By law, all blood units drawn must be screened for Hepatitis B "surface antigen"; however the best methods available are not capable of identifying all infectious units. At present there is no clinically recognized way of identifying blood containing non A, non B Hepatitis. "Surrogate methods", however, detect most NANB cases and also detect many Hepatitis B cases and are thus doubly effective. The surrogate tests in current use are the following:

a) an assay for antibodies to the Hepatitis B virus "core antigen". Almost all Hepatitis B infected people develop such antibodies as they mount a defense to the infection and the antibodies persist in their blood for many years after the active phase of the infection. Moreover, those who have been exposed to Hepatitis B have high risk infection with for non A, non B Hepatitis,

b) an assay for the enzyme alanine aminotransferase (ALT). This is a liver enzyme and when there is any inflammation of the liver (hepatitis) from any cause, ALT leaks out into the blood and can be measured there at higher levels than "normal".

One of the above infectious diseases, the one which causes the most post-transfusion morbidity is non A, non B Hepatitis.

Based on the above considerations and an evaluation of the economic cost and legal and health care risk versus benefits from the various conceivable combinations of tests for pre-donation screening of blood, it was determined that the combination Hemoglobin (HB), Hepatitis core antibody (HBc Ab) and ALT made the optimum analyte set.

The setting for the use of the system is the "nurse's station" of a blood collection center or an ad hoc location during a blood drive. This station is a small table at which the nurse and the donor sit while donor history is taken and (at present) a crude hemoglobin test is done. Actually, two tests may be done. The first is a qualitative observation of how rapidly the blood settles in a solution of copper sulfate (this is a messy, inconvenient test with a subjective interpretation). If this test gives ambiguous results, a second, quantitative test is done which measures the "hematocrit" (volume fraction of blood occupied by red cells). This result is directly proprotional to hemoglobin concentration for almost all subjects and provides an equivalent piece of information. The physical situation dictates that a useful predonation screening system should be small and portable.

There is reluctance on the part of blood donors, especially if a second puncture will be made to draw the blood unit, to have blood samples taken by venipuncture. (Two methods are in current practice: finger-stick and ear-lobe puncture with a glass capillary.) This places severe restrictions on the size and number of samples which can be taken.

There is a limit on the time for the system to operate. Nurse's time is very valuable and the rate at which blood can be collected is limited by the time needed in predonation activities. An upper limit of three minutes was established agency based on the time needed to take the donor's medical history and other needed information.

The test results from a predonation screen should be at least as valid, accurate and precise as the present state of the art. This means that measured HB and ALT concentrations have to be accurate within about 5% and that the presence or absence of HBc Ab must be determined reproducibly and with equivalent sensitivity as the present methods.

The concept of the present invention is of a fail-safe system composed of a small battery-powered instrument (monitor) and small single use (disposable) cartridges producing laboratory quality, objective results within a few minutes with a "user-friendly", protocol.

The specific concept for blood donation screening uses a single cartridge to perform the three tests (HB, HBc Ab, ALT) at least as well as existing clinical laboratory products in terms of accuracy, specificity and precision. The product is fail-safe by virtue of several sub-systems which look for the likely operator errors and system failures. That is, the results given will be correct or, if some system failure or operator error occurs, no result will be given and there will be an indication of what problem occured. The system is user-friendly because the user prompts, results and error messages are displayed on a small screen in plain, easily read, form. The system provides for a "hard copy" of the results printed on the blood donor information sheet in both human and machine-readable form. The system requires two drops (unmeasured) of blood as the samples for the three tests. We have found that a single fingerstick or ear prick provides ample blood for this purpose. The system has to perform enough assays for many tests (more than about 10) on a single charge of its internal, rechargeable batteries.

The constraints imposed by the predonation blood screen concept created several major technical challenges. Firstly the short time allowed eliminated many of the known chemistries for HBc Ab and ALT which require many minutes to complete. Secondly, the number of blood drops available and the consequent sample volume restriction (2 drops < about 50 $\mu$l) dictated that at least two of the tests be performed with a single blood drop. Thirdly, the need for small cartridges many of which can be stored conveniently in a small space precluded the use of a "large" cartridge. Fourthly, some other chemistries (such as NAD-linked assays for ALT) were precluded in a plastic cartridge because the UV light needed for the measurement is poorly transmitted by the plastics available and the power requirements to provide UV light would be excessive.

The solution reached required development of a novel and radical modifications of existing technology. The key strategic determinant was that only one chemistry was found which allowed measurement of ALT within the desired time frame. All available ALT chemistries require filtration of the blood to provide the appropriate plasma sample. These two considerations suggested the use of one blood drop for ALT assay exclusively since a suitable filtration method requires at least one drop to provide the minimum volume of plasma needed for the assay. There are separation methods which use less blood and provide an an adequate plasma filtrate, but these methods are not easy to implement in a plastic cartridge, use of which is desirable to combine three assays in a single disposable device. A further consideration was that the selected filtration method allowed the plasma filtrate to be checked to see if it is appropriate for ALT assay. Two common conditions (hemolysis and lipemia) can cause a false result. To ensure that correct results are obtained it is desireable to check for hemolysis and lipemia. The HB and HBc Ab assays are performed with a single drop of blood. The HB assay requires "lysis" of the red cells to render the sample clear so that a valid optical mesurement of HB can be made. A "conventional" rapid HBc Ab chemistry, agglutination of antigen-coated latex particles, had been developed in the laboratories of the present inventors for plasma or serum samples. To adapt this HBc Ab test for blood samples work with either whole blood or lysed blood was seen as a formidable objective because (a) the presence of intact red cells would mask

6

any observable agglutination of the (much smaller) latex particles and (b) undiluted, lysed blood which has no formed elements (red cells) to obscure the latex agglutination reaction is a very problematic medium in which to perform a latex agglutination reaction since it contains a very high protein and salt concentrations both of which are generally considered to be unfavorable for latex agglutination reactions. Moreover, the protein concentration of the lysed blood which will dominate the medium in which the agglutination reaction has to occur is variable depending on the sample. Nonetheless, we decided as a strategy to use lysed blood for both HB and HBc Ab assays.

The next major decision was the choice of the lysis agent. There are several ways to lyse red cells. Choices were severely restricted by the following considerations: (1) the lysis had to be complete and rapid; (2) the lytic reagent must not significantly inhibit the latex agglutination chemistry; (3) the lysis must not leave red cell fragments which scatter light and which might be confused with latex particles or their agglutinates. The only viable class of lytic reagent we found was detergents. These materials are known to have inhibitory effects on latex agglutination reactions. This turned out to be true for the HBc Ab assay using the available antigen-latex as the reagent. We therefore had to screen for detergents which had two partly conflicting properties (ability to lyse red cells without inhibiting the latex agglutination reaction). We found a situable detergent combination. Based on conventional wisdom, the use of detergent-lysed blood as a sample in a latex agglutination assay is a radical departure.

Lastly, the chemistry strategy adopted required three distinctly different measurment technologies for the three assays namely: transmission optics for HB, reflection optics for ALT and laser light fluctuation analysis for agglutination of latex particles in the presence of HBc Ab. The incorporation of these technologies into a single compact instrument is difficult.

The design constraints discussed above led to the development of a specific system for solving the blood donation pre-screening problems. This system, and its two main components, the analytic cartridge and the monitor, are described below specifically for this type of analysis.

## System

Single-use disposable cartridges (about the size of a credit card), having two sample application sites and lot-specific bar code; battery powered monitor consisiting of a cartridge insertion slot, display screen, printer, bar code readers and data port; calibration card (used to provide calibration information for a particular lot of cartridges to the monitor by means of a bar code); electronic test cartridge; analyte controls; recharging system for batteries; carrying case. The system gives three results in three minutes from two drops of blood.

## Cartridges

Made of injection molded plastic having internal channels and compartments, some for analyte measurement and some for verification of cartridge functions; contain dry reagents and other functional elements (porous disc, blood separtion unit, reagent impregnated paper); have lot-specific information "hot-stamped" onto the upper surface (this information instructs the monitor of the reagent lot number and expiry date so that if the monitor is not calibrated or the cartridges have expired the user is informed and no test results are provided until appropriate action is taken); have hot stamped visual cues as to where to apply the sample and how to insert the cartridge into the monitor. Cartridges are packaged individually in foil pouches with desiccant package. Pouches are provided in boxes containing multiple cartridges (e.g., 25) together with a calibration card. The calibration card contains information readable by the monitor (see below) used to calibrate the monitor for a particular lot of cartridges to a clinical value.

## Monitor

Electronic instrument containing rechargeable battery, optics, both for reading the assays and for checking cartridge function and appropriate actions by the user, three optic systems are used (transmission, reflection, and laser light scattering), heater, bar-code readers (2), printer, display screen, mains cable plug (to allow battery recharging), data port for input and export of digitized information. The monitor contains computer hardware and software which contols output and manipulation of electronic data provided by the various detector and verification systems present in the instrument.

The monitor is turned on and off by insertion and removal (respectively) of a cartridge. The monitor also turns off if no sample is applied within a certain time after cartridge insertion or if the cartridge is not removed within a preset time. There are no user accessible controls. The monitor is calibrated by insertion and reading of the calibration card contained with each box of cartridges. The monitor "remembers" calibration information for several (more than 2) lots of reagent-cartridges and can therefore recognize and run assays with all the cartridge lots without further user action. Assay results are displayed on a liquid crystal screen after the user has removed the used cartridge from the monitor. Results are also printed on the "donor form" in both human and machine readable form. A set of results (usually more than 10) are retained in a memory and can be exported to an external data base through a port. User instructions, prompts and error messages are displayed on the screen in plain English (or other vernacular language), and a tone is used to cue the user when action is needed (with a corresponding message displayed at the same time).

Ancillary Items

(1) Electronic test cartridge is a device which is perceived as a real cartridge by the monitor and permits the user to test monitor functions without using a cartridge. The ETC can also instruct the monitor as to which language to use and how to present the results. (2) Controls are reference materials which simulate real samples and have known analyte levels; they are used to test the entire system. (3) The calibration card is a card bearing a signal detectable by the instrument, usually a bar code. When a cartridge from a lot which have not been previously seen by the monitor is used, the monitor asks the user to insert this card in the appropriate slot. The bar code or other signal provides sufficient information to the instrument to calibrate the instrument for a particular lot of cartridges (i.e., it provides information to the control unit so that detection system readings are adjusted to allow for lot-to-lot variations in the reagents present in the analytical cartridges).

For an ETC used in a single analysis system for prothrombin time measurement (using a capillary flow cartridge and portable monitor), see U.S. Patent No. 4,756,884. For a control, see U.S. Patent No. 4,731,330. For a calibration card see, U.S. Patent Application Serial No.        (attorney docket No. BIOT-26/27771), filed April 25, 1989.

Protocol

The user starts with a monitor and pouched cartridges. After opening a pouch, the cartridge is inserted into the monitor, which turns the monitor on. The message "Please wait" (or a similar message) is displayed until the monitor has brought the cartridge to the required temperature and has completed self-diagnostic checks. The monitor then displays a message "Apply drops of blood" and the user obtains blood from the potential donor by finger or ear-stick. Blood drops are applied to the two application sites on the cartridge. The assays run automatically and when complete the monitor displays "Remove cartridge". After removal of the cartridge results are displayed for a number of sec (e.g., 20) and then the message "Insert donor form" appears. The user inserts the donor form into a slot in the printer which then pulls in the form and prints results. Finally the user is instructed to remove the form and the system is ready for the next tests.

The analytes and the chemistry of the tests carried out in the three analysis tracks are described in the following sections.

Hemoglobin

The major protein in blood is hemoglobin. Its function is to carry gases (oxygen and carbon dioxide) round the body. Hemoglobin is a colored substance in which the chromophore is called heme, a complex of ferrous ($Fe^{2+}$) iron and protoporphyrin. Essentially all the hemoglobin in blood is contained in red cells (erythrocytes). Red cells typically occupy 40 volume % of blood. Hemoglobin concentrations in blood range from about 5 to 20 grams/deci-liter (g/dL). Levels less than about 12 g/dL indicate that blood donation could compromise donor health. Measurement techniques in present use (e.g., "Hemocue®") generally involve (1) "lysis" (disruption) of the red cells so that the hemoglobin is released and uniformly dissolved and (2) oxidation of the hemoglobin to met-hemoglobin (ferric-heme). An excess of an ion such as azide is usually

8

EP 0 397 424 A2

added to form a defined complex with the met-hemoglobin. The net result is conversation of blood to a clear brown solution in which all the hemoglobin is in a defined chemical state (with known spectral properties) regardless of its initial oxidation and complexation state. Hemoglobin concentration is then measured by an optical method, e.g., transmission.

The Blood Screen System measures hemoglobin by the above method. Blood is applied to a dry porous disc containing a red cell lysing agent (a detergent mixture comprising two non-ionic components: (1) ana alkyl poly(ethylene glycol ether), especially "Thesit" and (2) an alkyl glycoside), sodium nitrite (the oxidizing agent) and sodium azide (the complexing agent). The disk is typically sintered (or other porous) plastic with pore sizes selected so that red blood cells are not removed by filtration (i.e., sufficiently large pore sizes are provided to allow red cells to freely enter the interior of the disk). Within the disc the reagents dissolve, mix with the blood, lyse the red cells and convert the hemoglobin to azide:met-hemoglobin. By the time the mixture reaches the bottom of the disc (about 10 seconds) the chemical processes are essentially complete and a clear, uniform brown solution is drawn by capillary action into the hemoglobin track. The composition of this solution is almost exactly what would be obtained by mixing dry reagents and blood in a test cube before application to the cartridge indicating that mixing in the porous disc is rapid and complete. Measurement of hemoglobin is achieved by transmission spectroscopy through a window in the cartridge with a well defined optical path-length after fluid flow has stopped.

Only a few combinations of detergents have been found to be sufficient lytic while not intefering with the agglutination reaction (for HBc Ab) that takes place on the same sample. Test procedures that enable selection of a detergent or group of detergents having suitable properties are set forth in Example 4.


Hepatitis B Virus Core Antibody

During hepatitis B virus infection, the body mounts an immune response in the later stages of which antibodies to the virus core protein are made. A permanent infection of the liver occurs, but usually the virus disappears from the blood after a few weeks. Antibodies to the core protein persist however, and typically antibody production is maintained indefinitely. These antibodies can be detected for many years after the infection. HBc Ab has therefore found favor as a good indicator of infection by hepatitis B. The antibodies are a heterogenous group of molecules which differ from patient to patient. All have the ability to bind specifically and tightly to the core antigen and all are bi- or polyvalent.

The conventional way (e.g., "Corezyme", "a commercial analysis system available from Abbott Laboratories) to measure HBc Ab is to expose an antigen coated surface to blood serum in the presence of an enzyme labeled antibody (a reagent). Antibodies in the sample and enzyme-labeled antibodies compete for binding to solid-phase antigen. After washing any unbound material from the surface, the antibody level in the sample can be inversely related to the amount of enzyme bound which can be measured by a color-forming enzyme-catalyzed reaction. Results are given by comparing the color produced with that from known positive and negative samples using an arbitrary "cut-off" level. Corezyme is a competitive binding assay in which sample antibody and enzyme labeled antibody (reagent) compete for binding to an antigen-coated plastic bead; after washing away unbound enzyme, the bound enzyme is measured.

HBc Ab is detected in the Blood Screen System by a latex particle agglutination test. Small (0.7 micron) latex particles coated with core antigen agglutinate in the presence of HBc Ab. The agglutination is measured by a laser optical system which, in effect determines the particle size distribution.

In the blood screen cartridge, the hemolysate which emerges from the porous disk is divided into two capillary tracks, one for hemoglobin determination the other for the HBc Ab test. The hemolysate in the HBc Ab track flows over a dry film of a reagent containing antigen-coated latex. The latex particles resuspend in the flowing hemolysate. Any antibodies present cause agglutination as the latex particles collide during their motion down the track. In the absence of antibody, the particles remain dispersed. The reaction mixture (hemolysate and latex) is directed so as to pass through a laser beam. The wavelength of the laser light is about the same as the latex particles. Light is scattered from the particles and blocked by large aggregates of particles. A detector which is directly opposite the capillary track from the laser collects transmitted light and the fluctuations in the signal produced are analyzed. The analysis generates a number we call the "slope" which is the slope of a signal derivative with respect to time. The slope is a quantitative measure of agglutination and is directly related to "% inhibition" which is a quantitative measure of antibody concentration derived from the Corezyme test. Percent inhibition is the reduction of color in the Corezyme test produced by a sample containing HBc Ab expressed as a percentage of the uninhibited color produced (on average) by negative samples. Up to about 60% inhibition is regarded as negative or "borderline", greater than 60% is positive.

9

Alanine Aminotransferase

This is a enzyme [EC 2.6.1.2; also known as glutomate pyruvate Transaninase (GPT)] found in the liver which catalyzes the transfer of amino groups from alanine to $\alpha$-ketoglutarate to form pyruvate and glutamate. In liver disease such as hepatitis, the enzyme leaks in unusual amounts into the blood. Note that there are other causes for ALT elevation such as cirrhosis of the live. In other words, ALT is a non-specific indicator of viral hepatitis. The normal enzyme level is less than 30 Units/liter. "Units" are international enzyme units ($\mu$ moles/minute at 37°). In hepatitis, levels can be elevated to several hundred units/liter.

Several methods exist for assay of ALT. They are all so-called "coupled" enzyme assays in which the enzyme is allowed to react with its substrates and one of the products are converted by other (added) enzymes to an easily measured product. For example, pyruvate made by ALT is oxidized by oxygen using the enzyme pyruvate oxidase as a catalyst to produce hydrogen peroxide which is then used to make a colored dye by enzymatic reaction with an uncolored "chromogen" which is a co-substrate for the enzyme peroxidase. Excess amounts of the ALT substrates, alanine and $\alpha$-ketoglutarate, of the enzymes pyruvate oxidase, peroxidase, of the chromogen and of the required cofactors for ALT and pyruvate oxidase are added as reagents. The oxygen needed is already present in sufficient quantity in blood plasma. In this way, the rate of color production is limited only by the ALT concentration in the sample.

In the Blood Screen System, blood is applied to a glass-fiber filter which removes red cells. This is required since red cells would obscure the color reaction and the relevant concentration of ALT is that in the blood plasma. The filter contains, in dry form, most of the reagents needed for the assay which dissolve in the blood plasma. Plasma/reagent mixture is drawn into a capillary track where it is optically inspected for any red cells (which would indicate a filter failure), hemolysis and lipemia which would interfere with the measurement of ALT. Hemolysis in this context would be an indication of an abused sample. Lipemia is the presence of excessive levels of lipid in blood; lipids which are in the form of particles scatter light and can interfere with optical measurements. The mixture then moves into a small circular disc of paper which contains the remaining assay reagents ($\alpha$-ketoglutarate and the chromogen). These reagents dissolve and the assay reaction sequence is initiated. A color is made in the paper and the rate of color production is proportional to the ALT concentration. The color production is measured by reflection optics.

The system response is expressed as rate of signal change with time (mVolts/s). There is an almost proportional relationship of response with ALT concentration. The system calculates ALT concentration by comparison with a calibration curve derived by fitting a mathematical relationship to the dose-response data.

The invention will now be described with reference to the Figures in which the same numbers are used to designate similar or functionally analogous elements in the various views shown.

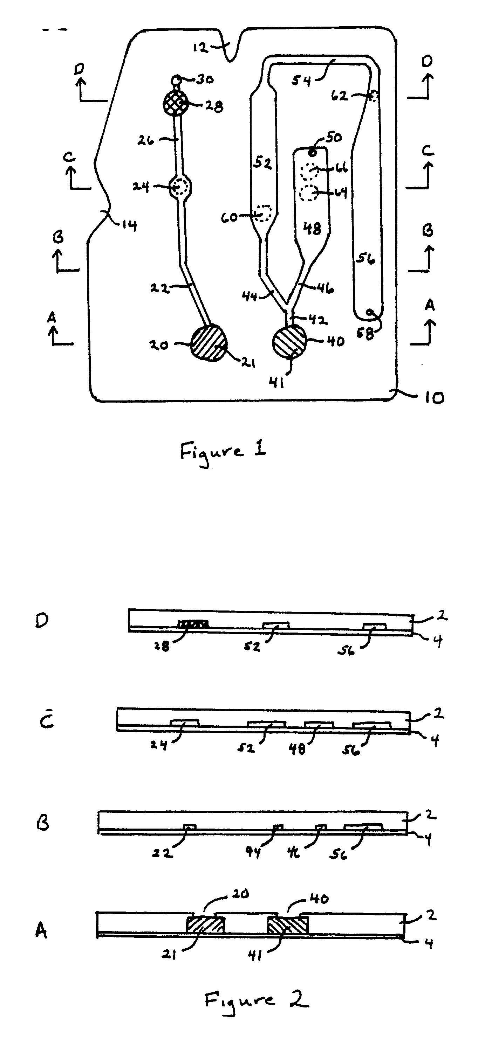

Figure 1 is a plan view of a cartridge that can be used in the blood donation screening embodiment invention discussed in detail above. Housing 10 is assymetrical and is provided with registration grooves 12 and 14 in order that the housing can be inserted into a monitor in only one position. Two sample application sites (20 and 40) are visible near the bottom of the Figure. In the embodiment shown, sample application site 20 is present at the beginning of the capillary track in which the ALT measurment will be made, and sample application site 40 is the beginning of two capillary track in which hemoglobin and antibody for hepatitis core antigen will be analyzed. Application site 20 contains filter 21, which is capable of separating red blood cells from a whole blood sample and allowing plasma to exit the bottom of the filter through capillary track 22. Plasma flow is along capillary track 22 until reaching section 24 of the capillary track, which is wider than the remainder of the capillary and is provided with a transparent area (indicated by the dotted circle) serving as a light path. This light path is used to verify that red cells have been filtered out of the blood plasma and that hemolysis has not occurred. Plasma continues to flow along capillary track 26 to reagent pad 28 which contains reagents used in the ALT analysis. Vent 30 on the opposite side of the reagent pad from capillary 26 provides for escape of gases and allows capillary flow to occur between sample application site 20 and reagent pad 28.

Sample application site 40 contains reagent pad 41 containing a detergent that lyses red cells and various hemoglobin reagents, as described above. A single capillary track 42 draws lysed blood from the bottom of the reagent pad. Blood is then divided by capillary tracks 44 and 46 into two tracks. Track 46 leads to a relatively large chamber 48 containing no reagents that terminates in vent 50. Chamber 48 is provided with at least two transparent areas indicated by dotted circles at 64 and 66 through which verification of sample lysis and detection of hemoglobin, respectively, can be carried out.

Capillary track 44 leads to chamber 52, a broad thin chamber in which latex particles used in the hepatitis antibody assay are dispersed. A transparent area indicated by dotted circle 60 at the beginning of chamber 52 provides for a verification of lysis of red blood cells. After lysed whole blood has passed through chamber 52, it enters capillary 54 which transports the sample past a detection area indicated by dotted circle 62 in which agglutination is measured by detecting change in effective particle size. A relatively large capillary chamber 56 terminating in vent 58 is provided to allow for continued capillary flow of sample past detection site 62, since the detection requires motion of particles past the detection point.

Figure 2 provides a series of cross-sectional views of the embodiment shown in Figure 1. Figure 2A is a view taken along line A-A of Figure 1. Construction of housing 10 from two plastic parts 2 and 4 can be seen in Figure 2A. Main section 2 contains indentions in its lower surface (as shown) used to form the various chambers and channels of the cartridge and holes to allow access to the various capillary tracks and to provide vents. Bottom cover plate 4 is essentially planer. In the view shown in Figure 2A, access ports 20 and 40 are visible as are filter 21 and reagent pad 41. Figure 2B, taken along line B-B of Figure 1, intersects housing 10 at the location of capillary tracks 22, 44, and 46 and capillary chamber 56. Figure 2C, taken along lines C-C of Figure 1, intersects housing 10 at the location of verification chamber 24, reagent chamber 52, measurement chamber 48, and flow chamber 56. Figure 2D, taken along line D-D of Figure 1, intersects housing 10 at the location of reagent pad 28, reagent chamber 52, and capillary flow chamber 56.

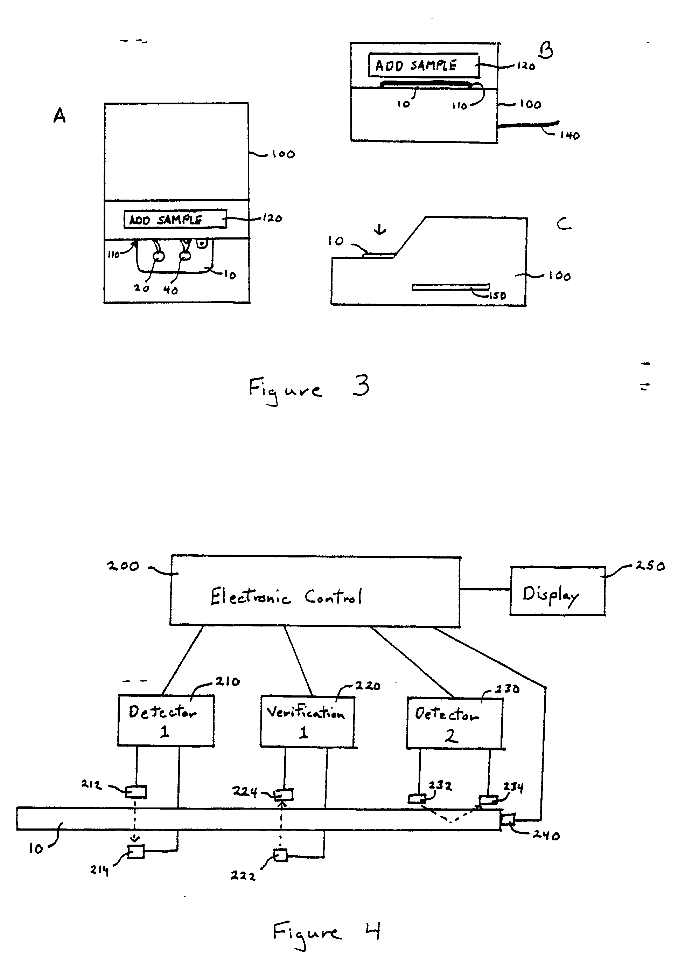

Figure 3 shows three views of the entire system comprising the analytical cartridge 10 shown in Figures 1 and 2 along with monitor 100. Figure 3A is a top view showing cartridge 10 inserted into slot 110 of monitor 100. Display means 120 is visible, showing a sample message. As shown in Figure 3A, sample application sites 20 and 40 are available for access of sample to cartridge 10 when cartridge 10 is fully inserted into slot 110, as shown in the Figure. The various detection and verification systems are not visible, as all of these are internal to the monitor and operate on portions of the capillary tracks that are inside the monitor when cartridge 10 is fully inserted into slot 110.

Figure 3B shows a front view of the same embodiment shown in Figure 3A. Cartridge 10 inserted into slot 110 and display 120 are visible in this view. Results card 140 is visible protruding from the right side of the instrument. This card is inserted into the instrument by the user (after being prompted to do so by display 120) and provides a permanent record of the analyses as a result of the instrument printing the analyses results on the card. In the view shown in Figure 3C, a side view of the same monitor 100, cartridge 10 is again visible. As indicated by the arrow, sample can be applied to cartridge 10 while cartridge 10 is inserted in the monitor. Printing slot 150, into which results card 140 can be inserted, is visible in this view.

Figure 4 is a schematic diagram showing some of the detector and verification systems along with the electronic controls and display that would be present in the monitor. When cartridge 10 is inserted fully into a monitor (not shown), it contacts switch 240, thereby providing an electronic message to the electronic control 200 and indicating that a cartridge has been inserted into the monitor. Electronic control 200 then displays a message on display 250 indicating that sample should be added to the sample application sites of the cartridge. A first detector (210) and a first verification system (220) provide electronic information to the electronic control 220. In the embodiment shown, light source 222 and light detector 224 can be used, for example, to determine that sample has penetrated sufficiently into cartridge 10 to provide sufficient sample for the first analysis. This information is relayed electronically to electronic control 200. If a signal is not generated by verification system 220, electronic control 200 causes an error message to be displayed on display 250. If sufficient sample is present, the first detector (210) is activated so that light (inidcated by the dashed arrow) is emitted by light source 212 and detected by detector 214. The resulting electronic signal is interpreted by electronic control 200, and the results of the analysis is displayed on display 250. Second detector system 230 shows operation of a second detector system by a different technique. Detector system 1 operates by transmission of light through cartridge 10 (transmission spectrophotometry) while the second detector system operates by reflectance spectrophotometry, as indicated by the dashed arrow being reflected back to detector 234 which is on the same side of cartridge 10 as light source 232.

Other detectors systems and verification systems, all connected to electronic control 200, would be provided in a similar manor as described previously.

The following examples are offered by way of illustration and not by way of limitation.

## EXAMPLE 1

In this example, the system of the invention was used to determine hemoglobin using the cartridge and monitor as shown in the Figures and the reagents described in detail above. The cartridge was 6.3 x 4.5 x 0.3 cm in size and had corresponding dimensions for the the various channels, chambers, and reaction pads and filters, which are presented in approximate scale relative to each other in the Figures. The same cartridge also had reagent tracks for ALT and HBc Ab, as shown in the Figures. The hemoglobin lysis pad (pad 41 of Figure 1) contained the following reagents: 12 $\mu$l of a solution containing 10% Thesit, 2% octyl glucoside, 1.5% sodium nitrite, 0.25% sodium azide in 50% water/50% isopropyl alcohol. The solution was evaporated to dryness before the lysis pad was used. The detection system in the monitor used a visible/infrared light source and measured for absorbance by methemoglobin. Results were compared to results of an analysis of the same samples using the commercially available Hemocue® analysis (Leo Diagnostics AB, Sweden).

TABLE 1

| COMPARISON OF ASSAY RESULTS (HEMOGLOBIN) | | |
|---|---|---|
| Patient Number | Hemoglobin, g/dL, Reference* | Hemoglobin, g/dL, Experimental |
| 1 | 5.8 | 5.1 |
| 2 | 7.0 | 6.9 |
| 3 | 9.5 | 8.9 |
| 4 | 10.4 | 10.2 |
| 5 | 11.7 | 11.3 |
| 6 | 13.5 | 13.1 |
| 7 | 15.5 | 15.3 |
| 8 | 16.6 | 16.4 |
| 9 | 17.5 | 17.9 |
| 10 | 18.0 | 18.5 |

*Reference method is Hemocue®
Samples are venous whole blood,
anticoagulaed with disodium EDTA

EXAMPLE 2

Using the same cartridge and instrument of Example 1, results were obtained for analysis of alanine aminotransferase (ALT) and compared to results obtained using the Reflotron system (Boehringer-Mannheim). The following reagents were used: (1) in the filter (filter 21 of Figure 1): 5 $\mu$l of a solution containing 0.875% (by weight) pyruvate oxidase, 0.208% horseradish peroxidase, 0.521% ascorbate oxidase, 4.812% alanine, 3.4385 potassium phosphate monobasic, 3.376% sucrose, 0.1% Tween 80, 0.038% thymine pyrophosphate, 0.011% manganese chloride, 0.003% FAD, 0.022% pyridoxal phosphate, 0.290% NaCl in 0.028 M phosphate buffer/0.0058 M imidazole; in the reflectance pad (pad 28 of Figure 1): 1 $\mu$l of a solution containing 0.026% Chromogen, 0.1% Tween 80, 0.1 % alpha-ketoglutarate in water. Both solutions were evaporated to dryness before use. Compartive resultes are shown in the following table.

TABLE 2

| COMPARISON OF ASSAY RESULTS (ALANINE AMINOTRANSFERASE) | |
|---|---|
| Reference | Invention |
| 40.8 | 46.5 |
| 85.7 | 83.5 |
| 58.7 | 65.0 |
| 73.0 | 79.9 |
| 212.0 | 249.4 |
| 95.1 | 93.8 |
| 47.8 | 48.3 |
| 62.4 | 67.0 |
| 163.0 | 176.8 |
| 11.9 | 11.2 |
| Difference range = -6.7 to + 1.16 Correlation = 0.99 (N = 10) | |

EXAMPLE 3

Using the same cartridge and instrument of Example 1, results were obtained for analysis of antibodies to hepatitis core antigen (HBc Ab) and compared to results obtained using the Corezyme system of Abbott Diagnostics. The reagent was an aqueous suspension of latex agglutination particles coated with HBc which was dried onto the surface of the reagent chamber. Two $\mu$l of an aqueous solution/suspension containing 1% (by weight) polystyrene beads (0.77 $\mu$m diameter), 0.01% HBC, 0.1% bovine serum albumin, 0.7% glycine, 0.93% NaCl, and 0.02% sodium azide was used. Comparative results are shown in the following table.

13

TABLE 3

| HEPATITIS CORE ANTIBODY ASSAY COMPARISON | | |
|---|---|---|
| Sample # (Blood samples from donors anticoagulated with sodium citrate) | Reference Assay Result (% Inhibition of Color Formation)[1] | Experimental Result [2] |
| 1 N | 33 | 0.17 N |
| 2 N | 3 | 0.18 N |
| 3 P | 67 | 0.22 P |
| 4 P | 71 | 0.21 P |
| 5 P | 82 | 0.33 P |
| 6 P (as defined by Corezyne) | 87 | 0.41 P (as defined by the Blood Screen) |
| N = Negative<br>P = Positive | | |

[1]Maximum color is defined as that made on average by samples known to be negative for the antibody; Corezyme = Reference.
[2]Experimental = Blood Screen System Agglutination Rate (Average of 2-3 values); Values of 0.20 indicate a positive.

EP 0 397 424 A2

EXAMPLE 4

In this experiment, various detergents were analyzed for their ability to act as lysis agents in the device shown in the Figures. Centered polyethylene reagent pads were saturated with a detergent solution, and the ability of the pad to provide completely lysed blood not containing any red cell fragments was analyzed. Since this sample is also used in the blood donor cartridge as described above to provide sample that is used in an agglutination reaction, inhibition of the agglutination reaction was also measured. Inhibition of agglutination was done subjectively, with 0 indicating little or no inhibition of agglutination and 5 representing the maximum amount of inhibition (essentially no agglutination under normal agglutinating conditions). As shown in Table 4, no single detergent provided complete lysis of red cells without inhibiting agglutination. Accordingly, the blood donation screening cartridge described above used a combination of thesit, which showed minimum agglutination in addition, and octoglucoside, which completely lysed red cells without forming red cell fragments.

Other combinations of detergents can be determined in the same manner by measuring both red cell lysis and inhibition of agglutination and selecting a combination of detergents that provides the desired complete lysis with a minimum of inhibition.

TABLE 4

| Detergent or Lysis Agent | Incomplete RBC lysis | Red Cell Fragments | Inhibiton of Agglutination |
|---|---|---|---|
| dodecyl(ethylene-glycolether), [Thiest] | + | - | 0 |
| octyl glucoside | + | + | 1 |
| CHAPS | + | + | 2 |
| zwittergent 3-08 | - | + | 5 |
| zwittergent 3-10 | + | + | 5 |
| zwittergent 3-12 | + | + | 4 |
| zwittergent 3-14 | + | + | 4 |
| zwittergent 3-16 | + | + | 5 |
| sodium deoxycholate | + | + | 3 |
| heptyl-thioglucoside | + | + | 2 |
| heptyl glucoside | + | + | 3 |
| Triton X-100 | + | - | 1 |
| Lubrol | + | + | 1 |
| octanoylmethylglucamide | + | + | 3 |
| octyl-thioglucoside | + | + | 3 |
| cetylpyridinium chloride | - | + | nd |
| cetyltrimethylammonium chloride | - | + | nd |
| octyl sulfate | - | + | nd |
| sodium cholate | - | + | nd |
| isotrideclypoly-(ethylene glycol) | + | + | 1 |
| Triton X-114 | + | + | 2 |
| dodecyl-B-D-maltoside | + | + | 3 |
| mellitin | + | - | nd |
| + = complete lysis or absence of red cell fragments | | | |
| - = incomplete lysis or presence of red cell fragments | | | |
| 0 = least agglutination | | | |
| 5 = most agglutination | | | |

All publications and patent applications cited in this specification are herein incorporated by reference as if each individual publication or patent application were specifically and individually indicated to be

EP 0 397 424 A2

incorporated by reference.

Although the foregoing invention has been described in some detail by way of illustration and example for purposes of clarity of understanding, it will be readily apparent to those of ordinary skill in the art in light of the teachings of this invention that certain changes and modifications may be made thereto.

**Claims**

1. A clinical analytical system, comprising:

(1) an analytical cartridge, comprising at least two sample containing means for retaining separate portions of a liquid sample, each of said sample containing means comprising access means for entry of sample and capillary means for movement and retention of said sample, wherein (a) at least one of said sample containing means contains reagent means for reacting with said sample in an analysis wherein (i) at least one of said reagent means is present in only one of said sample containing means, (ii) all analyses are relevant to a single medical evaluation, (iii) each of said analyses requires no more than 150 $\mu$l of sample to provide a result, and (iv) all reactions required for said analyses occur in said cartridge as a result of said sample interacting with said reagent means in said sample containing means, and (b) said cartridge is formed from a housing having dimensions no larger than 1 x 6 x 8 cm; and

(2) an analytical instrument comprising (a) registration means for retaining said analytical cartridge in said instrument; (b) detector means for detecting results of said analyses while said cartridge is retained in said instrument and providing said result in the form of electronic information, at least two of said detector means operating by different principles; (c) message means for providing an alpha-numeric message to a user of said instrument; (d) control means for processing electronic information provided by said detector means and relaying said information to said message means, information provided by at least one detector system being sufficient to provide a quantitative result to a user; said analytical instrument being no larger than 15 x 20 x 25 cm, said instrument reporting results of said analyses in no more than about 10 minutes after initiation of said analyses.

2. The system according to claim 1, wherein said instrument further comprises verification means for verifying proper operation of at least one step of each of said analyses in said cartridge while said cartridge is retained in said instrument and providing information relating to the operation of the analyses in the form of electronic information to said control means.

3. The system according to claim 1 or claim 2, wherein said instrument further comprises control signal detector means and said system further comprises control cartridge means capable of being inserted into said instrument prior to analysis using an analytical cartridge, wherein said control cartridge provides a signal detectable by said control signal detector means that provides information to said control means for use in processing information provided by said detector means during an analysis.

4. The system according to claim 3, wherein said analytical cartridge comprises a signal detectable by said instrument correlating said analytical cartridge to said control cartridge.

5. The system according to any one of the preceding claims, wherein said sample access means comprise

(a) sample receiving means for accepting an unmeasured quantity of a liquid sample up to 1000 $\mu$l in volume; and

(b) (i) sample division means for separating said sample into at least two parts, or (ii) second sample receiving means for accepting an unmeasured quantity of a second liquid sample, thereby providing separate sample portions.

6. The system according to any one of the preceding claims, wherein all sample movement in said analytical cartridge is driven and controlled by capillary forces.

7. The system according to any one of the preceding claims, wherein said detector means comprise first and second detector systems selected from the group consisting of transmission spectrophotometric systems, reflectance spectrophotometric systems, motion detection systems, particle size detection systems, light emission detection systems, electrochemical detection systems, nephelometric and turbidimetric detection systems, potentiometric detection systems, and amperometric detection systems.

8. The system according to any one of the preceding claims, wherein said message means comprises a liquid crystal display capable of providing said messages.

9. The system according to any one of the preceding claims, wherein said verification means comprises an optical light source and a detector located in said instrument to verify presence of said sample at a predetermined location in said cartridge.

10. The system according to any one of claims 1 to 8, wherein said verification means comprise said

16

detector means.

Figure 1

Figure 2

Figure 3

Figure 4